# EUROPEAN PATENT APPLICATION

(11) **EP 1 471 467 A2**
(43) Date of publication of application: **27.10.2004**
(21) Application number: 04101235.2
(22) Date of filing: 25.03.2004
(51) Int. Cl.: G07B 15/02

(54) **Transmission of parking-related data to the user's mobile station**

(30) Priority: 31.03.2003 FI 20030478
(71) Applicant: Payway Oy, 00510 Helsinki (FI)
(72) Inventor: Kulju, Hannu, 05900, Hyvinkää (FI); Mikkola, Joni, 00150, Helsinki (FI)
(74) Representative: Holmström, Stefan Mikael

(57) **Abstract**

The invention relates to a parking fee system comprising: a parking fee register (1) including means (2, 3) for maintaining parking data and a tariff database (4). In order to improve user-friendliness the parking fee register (1) is configured to send application data to a mobile station (MS) of a user of a determined vehicle in response to the reception of the parking data indicating the commencement of the parking of said vehicle, the application data including at least a tariff retrieved from the tariff database (4) on the basis of the parking data and the expiration time of the parking, the application data initiating an application in the mobile station (MS) of the user that offers the user a chance to keep track in real time of at least the sum of the accrued parking fee and the remaining parking time.

## Description

### FIELD OF THE INVENTION

The invention relates to the transmission of parking-related data to a user in a parking fee system, in which the user records the commencement of the parking by sending parking data to a parking fee register. In such a solution the parking is charged afterwards based on the data stored in the parking fee register, for instance via a telephone bill or a credit card.

### DESCRIPTION OF THE PRIOR ART

Solutions are previously known, in which a user records the parking by means of a mobile station when the parking starts. The user then utilizes the mobile station for sending parking data to the parking fee register. In this context the parking fee register refers to both computer equipment that handling communication and the processing and also to a specific database (or databases) maintaining data. After the reception of parking data, the parking fee register starts to calculate the parking fee according to the area-specific tariff defined for the particular area in which the parking has taken place. Depending on the case, the parking fee register stops calculating the parking fee when the predetermined time has expired, at a particular time or when the user informs the parking fee register by means of a mobile station that the parking is terminated. Thus, the parking fee register calculates the final sum to be charged for the parking, which it forwards to be charged afterwards, for instance via a telephone bill or a credit card.

A drawback with the above explained prior art solution is the poor user-friendliness thereof. During parking the user is not provided with data concerning the ongoing parking. If the user wants to keep account of the costs the parking causes, the user himself must find out the tariff used within the area and then by means of this piece of information and the times calculate the costs of the parking. This is in practice very laborious and difficult.

Another drawback associated with the prior art is that the user is barely aware of the remaining parking time during parking. For instance in such parking applications, in which the user when informing about the commencement of the parking at the same time defines and indicates the expiration time of the parking, or in which the longest allowed parking time has been defined, the remaining parking time is naturally a very interesting piece of information.

In known solutions the parking fee register may just before the parking time expires (for instance 10 minutes beforehand) inform the user about the termination of the parking via the mobile station of the user. However, this is not a very user-friendly solution, since such a message may come as a surprise to the user and may arrive too late, in which case the user is unable to arrive in time for instance to move his vehicle. It would be desirable for the user that he could continuously keep track of the parking-related data. However, the prior art solutions do not allow this, because the number of messages to be sent to the user should be kept at a minimum. Otherwise the messages to be sent to hundreds and thousands of users of the parking fee register would block the telecommunication networks or would at least considerably increase the costs.

### BRIEF DESCRIPTION OF THE INVENTION

It is an object of the present invention to solve the above problem and to offer a new solution that improves the user-friendliness of the parking fee system.

Another object of the invention is to provide a solution that allows transmitting parking-related data to the user more efficiently than before without significantly loading the system.

A third object of the invention is to provide a solution that more easily than before allows providing the user with instructions that a particular user requires at a particular moment such that the system could be utilized to best possible effect in respect of the user.

The above and other objects of the invention are achieved with a method according to independent claim 1, a parking system according to independent claim 5, a mobile station according to independent claim 9 and a computer program according to independent claim 11.

Application data to be sent to the user is utilized in the present invention as well as an application to be activated in the mobile station of the user. The application data is selected on the basis of the data recorded into the parking fee register when the parking commences so that the introduced application considering the needs of the user is tailored particularly for the area, in which the user has parked his vehicle. Therefore, the application activated in the mobile station of the user is capable of accurately calculating in accordance with the tariff sent to the mobile station the parking fee accrued during the ongoing parking and to keep track of the remaining parking time, if the expiration time of the parking has been defined. Hence, the user is able to keep track of the parking-related data in real time by means of his mobile station, if desired.

In situations, in which the user or the system has not defined the expiration time of the parking, the user need not be informed about the remaining parking time.

The most significant advantages of the present invention include the improved user-friendliness and the avoidance of unnecessary loading the mobile network and the parking fee register. The user may namely keep account of the parking-related data in real time without increasing the load of the employed mobile network or parking fee register. This is thanks to the fact that the mobile station is able to independently produce and provide the user with the necessary data, reminders and alarms owing to the application data sent thereto. Consequently the different messages, reminders and alarms to be sent over the radio path to the mobile station become unnecessary. An advantage over the prior art solutions is that the arrangement according to the present invention allows the user to better recall the ongoing parking. The problem with the available systems has in practice been particularly in long-term parking that the user does not remember to stop the parking, when he leaves the parking lot in his car. The parking data shown on the display of a mobile station reduce the chance of forgetting.

In a preferred embodiment of the invention, a program code associated with the application need not be stored in advance; instead the program code in question can be entirely included in the application data to be sent to the mobile station when parking takes place. The memory capacity of the mobile station is not unnecessarily used for storing the program code.

The preferred embodiments of the method, the parking fee system, the mobile station and the computer program are disclosed in the dependent claims 2 to 4, 6 to 8, 10 and 12.

### BRIEF DESCRIPTION OF THE DRAWINGS

In the following the invention will be described in greater detail with reference to the accompanying drawings, in which:
Figure 1 is a flow chart showing a first preferred embodiment of the method according to the invention, and
Figure 2 is a block diagram showing a first preferred embodiment of the parking fee system according to the invention.

### DESCRIPTION OF THE PREFERRED EMBODIMENTS

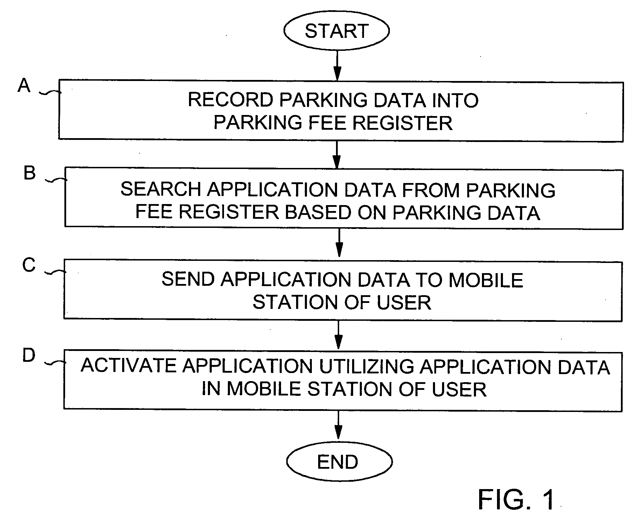

Figure 1 is a flow chart showing a first preferred embodiment of the method according to the invention. The flow chart in Figure 1 is applicable to be utilized in a parking fee system, in which the users inform the parking fee register about their parkings through their mobile stations, whereby the parking fee register charges the users their respective parking fees based on the information sent.

In block A the parking data is recorded into the parking fee register. Then the user, i.e. the driver of the vehicle, sends parking data to the parking fee register after the parking has taken place. The user may send the parking data by phoning a predetermined service number, sending a short message to a predetermined number or feeding the data into the parking fee register through a user interface utilizing the WAP (Wireless Application Protocol) technique.

If the user is a pre-registered user of the service, then data concerning the user has previously been stored into the parking fee register, such as data required for billing the user, the mobile telephone number of the user and the identifier of the vehicle employed by the user i.e. the registration number or similar identifier defined by the parking fee system. When a normal parking situation is concerned it then suffices that the user and the area, where parking takes place, can be identified from the parking data transmitted to the parking fee register in connection with the parking.

In the simplest form the user can be identified such that a subscriber identifier A, i.e. the identifier of the mobile station, used for transmitting the parking data is transmitted together with the parking data from the mobile network to the parking fee register. Alternatively the user may supply from his mobile station for instance a predetermined individual identifier given to him, by which the user can be identified. After the identification of the user, the parking fee system is able to determine in advance by means of the recorded data for instance the identifier of the vehicle and the billing method.

Identifying the area, where parking has taken place, may be based on locating the user, for instance through a mobile network. In the simplest form the mobile network may then provide the parking fee system with the identifier of the radio cell, which the mobile station of the user has utilized when the parking data has been sent. Based on the identifier of the cell the parking fee register determines the area, in which the parking has taken place. Alternatively, if for instance a GPS (Global Positioning System) receiver is integrated into the mobile station that the user has employed, the parking fee system may in addition to the parking data be provided with coordinates describing the location of the mobile station, on the basis of which the parking fee register determines the area. Alternatively, it is thought that the user has selected for instance an area-specific phone number shown on a traffic sign when sending parking data with his mobile station, in which case the selected phone number indicates the area. Another alternative is that the user keys in the area identifier indicated on the traffic sign when sending the parking data, in which case the service number, into which the data is sent, may be the same in all areas.

If the user has not registered into the service in advance, he must depending on the application provide other necessary data as well when sending the parking data, such as a credit card number and a registration identifier of the vehicle, so as to provide the parking fee register with all the required data.

In block B, application data is searched from the parking fee register based on the parking data. Then the application data is provided with data depending on individual parking, such as the area tariff, in which the parking has taken place. Here, the tariff refers to the data, on the basis of which the user is charged for the parking. The tariff therefore indicates the size of the charging at different times, and thereby the tariff is used to accurately calculate how much is charged for the parking, when the commencement time and expiration time of the parking is known.

If the data supplied to the parking fee register indicates that such a parking situation is concerned, in which the expiration time of the parking has been defined, then the application data is provided with the expiration time of the parking. Examples of situations, in which the expiration time of the parking has been defined, include:
- areas, in which the parking has taken place, employ a maximum time for the parking (for instance 2 hours at the maximum),
- when sending parking data, the user has indicated that the parking ends at a particular time or after a certain time, and
- parking is prohibited in the areas, where the parking has taken place, after a certain time.

Depending on the application, the application data may be provided with other data from the parking fee register, such as instruction data. Thus the instruction data includes data intended for guiding the user, the data being transmitted to the user in particular predetermined situations. The instruction data may depend on the area, meaning that different instruction data is included in the application data when parking takes place in different areas. The application data may also be provided with information for instance about when the parking in the area concerned becomes free. Then the application is able to inform the user in real time how long the parking is still chargeable.

The application data to be sent to the mobile station may specifically according to each case be formed exclusively of parameters of the kind mentioned above (tariff, expiration time of parking, instruction data etc) that the program code of the application utilizes. Thus, the program code of the application is stored in advance in the memory of the mobile station. The need to send the same program code several times to the same mobile station is avoided. Alternatively, the program code of the application may each time be included in the application data to be sent to the mobile station. Then the limited memory capacity of the mobile station is not allocated for storing the program code. It is also thought that the program code is entirely included in the application data when the mobile station utilizes the service for the first time, or when a new version exists of the program code or a new area-specific version, which has not yet been sent to the mobile station. The application data is preferably transmitted to the mobile station with the acknowledgment message associated with the commencement of the parking.

In block C, the application data is sent to the mobile station of the user through a mobile network.

In block D, an application utilizing the application data is activated in the mobile station of the user. Preferably this takes place automatically without requiring any manual measures to be taken by the user immediately when the mobile station has received the application data. An initiated application offers the user a chance to keep account of the parking-related data in real time. This is possible since the application introduced in the mobile station of the user utilizes the tariff data for calculating the sum of the parking fee, whereby the user is able to display the total sum on the display of his mobile station. In addition, the application calculates the remaining parking time, if the expiration time of the parking has been defined. Furthermore, the application can in predetermined situations present instructions for the user, if the application data is provided with the instruction data mentioned above. Depending on the implementation the user may be provided with other data as well, such as the elapsed parking time etc.

In order to calculate the accrued parking fee and the remaining parking time the application requires the commencement time of the parking. This may depending on the implementation be included in the application data or alternatively the application may search for it from the memory of the mobile station, where it is stored when the user sends the parking data from the mobile station to the parking fee register. When the commencement time is known, the application is able to utilize the internal clock of the mobile station for measuring the time in order to perform calculations. In accordance with an embodiment the commencement time of the parking does not necessarily have to be transmitted in the application data, because when the terminal accepts the application data, it may automatically activate the parking application, in which case for instance the tariff calculator starts to calculate onwards from the time mentioned irrespective of the commencement time. If need be, the commencement time of the parking is available in the parking fee system.

When the parking is terminated, the user informs the parking fee register about this by means of a mobile station. Thus the parking fee register may send via the mobile station a deactivating command to the application that deactivates the application. Alternatively, the deactivation command may be transmitted directly from the user for instance in such a manner that the user selects from the menu shown in the application a deactivation command corresponding to the termination of the parking, whereby the application guides the mobile station to inform the parking fee register about the termination of the parking, and thereafter deactivates itself. After the deactivation command, before deactivation, the application may also store in the memory of the mobile station a note into the log file concerning the accrued parking fee and the parking time. Consequently, the user may by means of the log file contents keep track of the parking-related data. Also the parking fee register may maintain such a log file that it sends for instance at regular intervals by e-mail to the user. In accordance with an embodiment, the log file that includes for instance the commencement and expiration times of the parking as well as information about the accrued parking fee is transmitted in the acknowledgement message of the termination to the mobile station of the user. If the program code of the application is stored in the memory of the mobile station, it may preferably maintain the data for instance on all parking fees for instance during a certain period of time. Also, the program code of the application maintains data on other desired parameters, such as parking times or parking spaces.

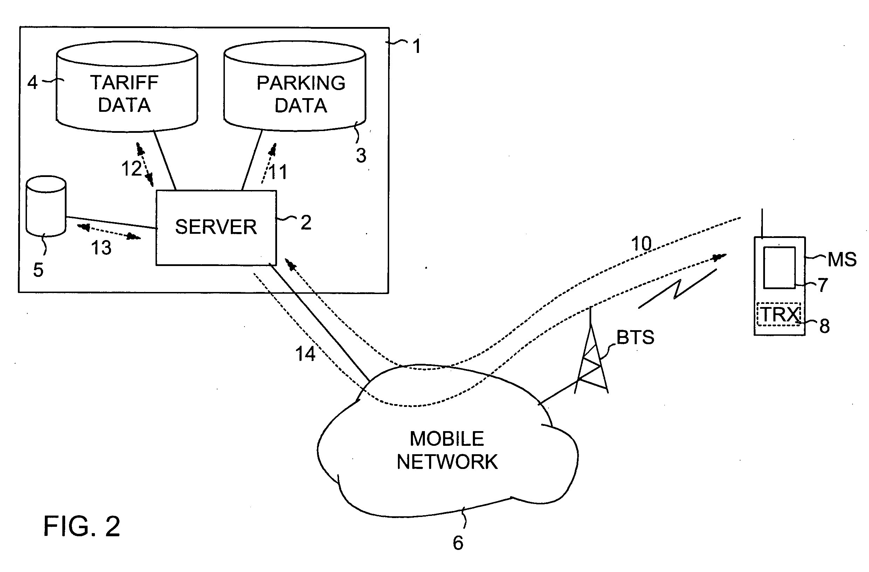

Figure 2 is a block diagram showing a first preferable embodiment of the parking fee system according to the invention. The method described in Figure 1 can be utilized in the system shown in Figure 2.

When the user of the mobile station in Figure 2 has parked a vehicle, he sends 10 the parking data to a parking fee register 1 through a base station BTS and a mobile network 6 utilizing a transceiver 8 of the mobile station MS. It is assumed in this example that the user is previously registered and that the mobile network informs the parking fee system the location (cell identifier) of the user. It therefore suffices that the user for instance calls a predetermined service number or sends a predetermined text message to a predetermined service number. The mobile network then provides the parking data with a cell identifier and a subscriber identifier A of the mobile station, on the basis of which the parking register 1 identifies the user and the area, where the parking takes plade.

A server 2 of the parking fee register 1 stores 11 the parking data in a database 3, from where the data can be retrieved for instance when a car park attendant wants to check whether the parking fee is paid through the system at a particular checking moment for a particular vehicle (i.e. whether the user has recorded the parking).

After the reception of the parking data, the server 2 starts to collect the application data. Based on the parking data the server 2 of the parking fee register 1 retrieves 12 a tariff from a tariff database 4 that relates to the area, in which the vehicle is parked. The parking fee register 1 may additionally include other databases 5, in which other data to be included in the application data is stored, such as for example instruction data, based on which the user of the mobile station is provided with instructions. The server retrieves 13 and also includes the instruction data to the application data to be sent. It should be noted that even though Figure 2 shows by way of example that the parking fee register 1 comprises several separate databases, the data can also be maintained in other ways, for instance so that all data is stored in the hard disc of the server 2.

The application data, which may include as explained in Figure 1 also the program code of the application, the parking fee register 1 sends 14 through the mobile network to the mobile station MS, which receives the application data utilizing a transceiver 8.

An application is activated in the mobile station MS in response to the reception of the application data, said application utilizing the received application data as shown in Figure 1. Thus, the user may obtain on a display 7 of his mobile station data concerning the parking in real time, if desired. Such data may include for instance the accrued parking fee, the parking time, the remaining parking time as well as instructions associated with the use of the parking fee system.

It is to be understood that the description above and the figures associated therewith are merely intended to illustrate the present invention. Different variations and modifications of the invention will be obvious for those skilled in the art, however, without deviating from the scope of the invention disclosed in the accompanying claims.

## Claims

1. A method for transmitting parking-related data to a user in a parking fee system, in which the user records parking data when the parking commences into a parking fee register of the parking fee system, **characterized by**
retrieving on the basis of the parking data from the parking fee register of the parking fee system application data that includes at least the tariff and the expiration time of the parking, if such an expiration time has been defined,
sending the application data to the mobile station of the user,
activating an application utilizing the application data in the mobile station of the user, the application offering the user by utilizing the tariff a chance to keep track in real time of at least the sum of the accrued parking fee and the remaining parking time, if the expiration time has been defined.

2. A method as claimed in claim 1, **characterized in that** a program code of the application is entirely included in the application data to be sent.

3. A method as claimed in claim 1, **characterized by**
storing the program code of the application in a memory of the mobile station,
sending application data, which includes data related to only the parking event in question, to the mobile station, in the memory of which the program code of the application is stored, and
activating the application stored in the memory to utilize the application data sent.

4. A method as claimed in any one of claims 1 to 3, **characterized by**
maintaining a log file in the memory of the mobile station by storing the data concerning the accrued parking fees into said log file.

5. Parking fee system comprising:
a parking fee register (1) including means (2, 3) for maintaining parking data on the vehicles belonging to the system, for which the parking fee register has received parking data indicating the commencement of the parking, and
a tariff database (4) for maintaining data on the tariffs of the areas within the system, based on which the parking fee register charges the parking fees in the areas concerned, **characterized in that**
the parking fee register (1) is configured to send application data to a mobile station (MS) of the user of a determined vehicle in response to the reception of the parking data indicating the commencement of the parking of said vehicle, the application data including at least a tariff retrieved from the tariff database (4) on the basis of the parking data and the expiration time of the parking, if such an expiration time has been defined, the application data initiating an application in the mobile station (MS) of the user, which utilizing said tariff offers the user a chance to keep track in real time of at least the sum of the accrued parking fee and the remaining parking time, if the expiration time of the parking has been defined.

6. A system as claimed in claim 5, **characterized in that** the parking fee register (1) is configured to receive location information from a mobile network (6) that indicates the location of the mobile station (MS) of the user while receiving the parking data, and based on the location information to determine the area, in which the parking has taken place.

7. A system as claimed in claim 5 or 6, **characterized in that** the parking fee register (1) is configured to send application data to the mobile station (MS) of the user, the application data including area-specific instruction data that can be utilized to initiate an application in the mobile station (MS) of the user to provide instructions to the user of the mobile station in predetermined situations.

8. A system as claimed in any one of claims 5 to 7, **characterized in that** the parking fee register (1) is configured in response to a registration indicating the termination of the parking of a particular vehicle to send a predetermined deactivation command to the mobile station (MS) of the user of the vehicle that deactivates the application initiated in the mobile station.

9. A mobile station (MS) comprising:
a receiver (8) for receiving application data, and
a display (7) for displaying information to the user of the device,
**characterized in that** the mobile station (MS) is by means of the received application data configured to:
calculate an accrued parking fee utilizing a tariff included in the application data,
calculate the remaining parking time, if the application data shows that the expiration time of the parking has been defined, and
provide the display (7) with information that show at least the sum of the accrued parking fee and the remaining parking time, if the expiration time of the parking has been defined.

10. A mobile station as claimed in claim 9, **characterized in that** the mobile station (MS) is configured to maintain in memory a log file by storing data concerning the accrued parking fees into the log file.

11. A computer program, **characterized in that** said computer program is configured to control an apparatus after activation to
calculate an accrued parking fee utilizing a tariff received by the apparatus,
calculate the remaining parking time, if the apparatus has received a piece of information indicating the expiration time of the parking, and
provide a display with information indicating at least the sum of the accrued parking fee and the remaining parking time, if data concerning the expiration time of the parking has been received.

12. A computer program as claimed in claim 11, **characterized in that** the computer program is configured to control the apparatus to maintain in memory a log file concerning the accrued parking fees by storing a note into said log file concerning the accrued parking fee in response to a deactivation command of the computer program.
